# EUROPEAN PATENT APPLICATION

(11) **EP 1 055 834 A1**
(43) Date of publication of application: **29.11.2000**
(21) Application number: 98953074.6
(22) Date of filing: 17.11.1998
(51) Int. Cl.: F16C 29/06

(54) **LINEAR MOTION GUIDE APPARATUS AND TABLE TRANSFER APPARATUS**

(71) Applicant: THK CO., LTD., Shinagawa-ku, Tokyo 141-0031 (JP)
(72) Inventor: TERAMACHI, Hiroshi-THK Co., Ltd, Tokyo 141-0031 (JP)
(74) Representative: Haley, Stephen
(86) International application number: JP9805162
(87) International publication number: WO0029756

(57) **Abstract**

Front and rear sides of each of balls are held by means of ball-supporting members (21) of a ball chain (20) in a loaded-ball running groove (10) and a loaded-ball running counter-groove (5), thus making it possible to prevent the ball from coming off. Depths of these grooves (5, 10) are increased by bringing opposing surfaces of the movable block and the guide rail into a closer relationship to the joint member. The cross-sectional shape of these grooves (5, 10) approximates a contour of the ball.

## Description

### Technical Field:

The present invention relates to a linear motion guide apparatus for carrying out the linear motion guide through balls.

### Background Art:

In general, the conventional linear motion guide apparatus is composed of a guide rail and a movable block, which is provided movably on the guide rail through a plurality of balls. The movable block has a block body and end plates. The block body is provided with loaded-ball running grooves corresponding to loaded-ball running counter-grooves, which are formed on the guide rail and with non-loaded-ball return passages provided in parallel with the loaded-ball running grooves. The end plates are provided on the opposite sides of the block body for connecting the loaded-ball running grooves with the ball return passages to form ball direction changing passages for forming endless circulation passages for the balls.

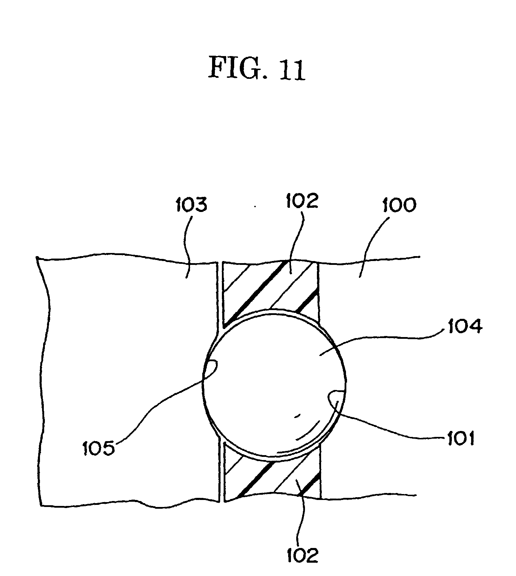

As partially shown in FIG. 11, retainers 102 are placed on the portions of the end surface of the movable block 100, between which the loaded-ball-running groove 101 locates. The width of the opening defined by the retainers 102 is designed to be smaller than the diameter of the ball. Such a structure can prevent the ball 104 from coming off the loaded-ball running groove, even after the guide rail is pulled out of the movable block 100.

In the conventional prior art described above, the retainers 102 locate between the opposing surfaces of the movable block and the guide rail, on which the loaded-ball running groove 101 and the loaded-ball running counter-groove 105 are formed, respectively. Consequently, the loaded-ball running groove 101 and the loaded-ball running counter-groove 105 are restricted in their depth by the thickness of the retainer 102, thus leading to relatively small depths of the loaded-ball running groove 101 and the loaded-ball running counter-groove 105.

As a result, deviation of the contact points of the ball 104 with the loaded-ball running groove 101 and the loaded-ball running counter-groove 105 from their deepest point in the width direction thereof may cause the problem of the edge load, in which the ball 104 comes into contact with the edges of the loaded-ball running groove 101 and the loaded-ball running counter-groove 105 resulting in stress concentration in these edges.

When the opposing surfaces of the movable block 100 and the guide rail 103, on which the loaded-ball running groove 101 and the loaded-ball running counter-groove 105 are formed, respectively, shift in parallel with each other in the opposite directions, thus generating a load in a "shearing direction", the contact points of the ball 104 with the loaded-ball running groove 101 and the loaded-ball running counter-groove 105 may deviate in the width direction thereof, causing the edge load.

There is an idea of increasing the depths of the loaded-ball-running groove 101 and the loaded-ball-running counter-groove 105 to prevent the occurrence of the edge load. No use of the retainer 102 permits to increase the depths of the loaded-ball-running groove 101 and the loaded-ball-running counter-groove 105. However, the ball may easily come off the loaded-ball-running groove 101 when the guide rail 103 is pulled out of the movable block 100.

### Disclosure of Invention:

An object of the present invention, which was made in order to solve the above-mentioned problems of the conventional prior art, is to provide a linear motion guide apparatus, which permits to impart a deep-groove structure to the loaded-ball running grooves, preventing the occurrence of the edge load and to prevent the ball from coming off the loaded-ball running groove even after the guide rail is pulled out of the movable block.

In order to attain the above-described object, the linear motion guide apparatus of the present invention comprises:
a guide rail; and
a movable block provided movably on said guide rail through a plurality of balls,
   said movable block having a block body and direction changing passage forming members, said block body being provided with loaded-ball running grooves corresponding to loaded-ball running counter-grooves formed on said guide rail and with ball return passages provided in parallel with said loaded-ball running grooves, and said direction changing passage forming members being provided on opposite sides of said block body for connecting said loaded-ball running grooves with said ball return passages to form ball direction changing passages for forming endless circulation passages for the balls;
   wherein:
there is provided a ball chain, which comprises ball-supporting members and joint members having flexibility, each of said ball-supporting members locating between adjacent two balls so that front and rear sides of each of the balls in a running direction thereof are held by adjacent two ball-supporting members, and said joint members connecting the adjacent two ball-supporting members with each other; and
   said ball-supporting members of said ball chain locate in the loaded-ball running counter-groove of said guide rail and the loaded-ball running groove of said movable block, the joint member extends into a gap formed between opposing surfaces of said movable block and said guide rail, on which the loaded-ball running groove and the loaded-ball running counter-groove are formed, respectively, and depths of the loaded-ball running groove and the loaded-ball running counter-groove are increased by bringing said opposing surfaces of said movable block and said guide rail into a closer relationship to said joint member.

According to the linear motion guide apparatus having the above-described structure, the front and rear sides of each of the balls are held by the adjacent two ball-supporting members to prevent the ball from coming off the loaded-ball running groove even after the guide rail is pulled out of the movable block. The ball-supporting members locate within the loaded-ball running groove and the loaded-ball running counter-groove so that the ball-supporting members can be made large to the extent that their size is substantially identical with the diameter of the ball, irrespective of the depths of the loaded-ball running groove and the loaded-ball running counter-groove. It is therefore possible to support the balls surely.

The joint member, which locates between the opposing surfaces of the movable block and the guide rail, has no function of directly supporting the ball, with the result that the thickness of the joint member can be decreased. It is therefore possible to bring the opposing surfaces of the movable block and the guide rail into the closer relationship to the joint member having the decreased thickness to increase the depths of the loaded-ball running groove and the loaded-ball running counter-groove as much as possible.

The increase in depths of the grooves makes it possible to prevent the ball from coming into contact with the edges of the grooves even when the deviation of the contact points of the ball with the grooves in their width direction occurs. There can accordingly be avoided the occurrence of the problem of the edge load, in which stress concentrates in the edges of the grooves. It is therefore possible to extend the range of an area within which the ball can come into contact with the grooves in their width direction, thus permitting selection of an appropriate contact angle within an extended range thereof.

The fitting length of the ball into the loaded-ball-running groove and the loaded-ball-running counter-groove in their depth direction also increases. Even when there applies the load having a function of shifting parallelly the opposing surfaces of the movable block and the guide rail in opposite directions to each other in the width direction of the grooves, the contact points of the ball with the grooves deviate within an intermediate region between the deepest point of the grooves and the edges thereof, thus making it possible to prevent the ball from coming into contact with the edges of the grooves.

The linear motion guide apparatus of the present invention may comprise:
a guide rail having a rectangular cross section; and
a movable block having opposite support leg portions, which face opposite side surfaces of said guide rail,
   said guide rail having on each of the opposite side surfaces thereof a single loaded-ball running counter-groove extending linearly so as to provide a total number thereof of two, and said movable block having on the opposite support leg portions thereof loaded-ball running grooves corresponding to the loaded-ball running counter-grooves of said guide rail,
   said movable block having a block body and direction changing passage forming members, said block body being provided with loaded-ball running grooves corresponding to said loaded-ball running counter-grooves of said guide rail and with non-loaded-ball return passages provided in parallel with said loaded-ball running grooves, and said direction changing passage forming members being provided on opposite sides of said block body for connecting said loaded-ball running grooves with said non-loaded-ball return passages to form ball direction changing passages for forming endless circulation passages for the balls;
   wherein:
there is provided a ball chain, which comprises ball-supporting members and joint members having flexibility, each of said ball-supporting members locating between adjacent two balls so that front and rear sides of each of the balls in a running direction thereof are held by adjacent two ball-supporting members to prevent the ball from coming off the ball-supporting members, and said joint members connecting the adjacent two ball-supporting members with each other; and
   said ball-supporting members of said ball chain locate in the loaded-ball running counter-groove of said guide rail and the loaded-ball running groove of said movable block, the joint member extends into a gap formed between opposing surfaces of said movable block and said guide rail, on which the loaded-ball running groove and the loaded-ball running counter-groove are formed, respectively, and depths of the loaded-ball running groove and the loaded-ball running counter-groove are increased by bringing said opposing surfaces of said movable block and said guide rail into a closer relationship to said joint member.

According to such a structure in which a single ball train is provided on each of the opposite side surfaces of the guide rail, lateral direction load, which has a function of urging the support leg portions of the movable block against the opposite side surfaces of the guide rail, applies so as to compress the ball locating between the guide rail and the corresponding loaded-ball running groove of the support leg portions. The ball bears the lateral direction load without causing any undesirable movement of the movable block.

When there applies radial load having a function of pressing the movable block toward the guide rail, inverse-radial load having a function of lifting the movable block from the guide rail or moment load having a function of swinging the movable block around the guide rail, there is generated force having a function of causing the loaded-ball running groove and the loaded-ball running counter-groove, between which the balls locate, to deviate parallelly from each other in the opposite directions, i.e., in a sharing direction. The increased depths of the loaded-ball running groove and the loaded-ball-running counter-groove however makes it possible to support the movable block without causing the problem of the edge load in the edges of the grooves.

Each of the loaded-ball running grooves and the loaded-ball-running counter-groove may have a shape in its cross section, which approximates a contour of the ball.

When the shape of each of the loaded-ball running groove and the loaded-ball running counter-groove in its cross section in the perpendicular direction to the extending direction of the grooves approximates the contour of the ball, it is possible to prevent the unfavorable movement of the ball relative to the grooves.

When the ball chain has a non-endless belt structure, it is possible to carry out an assembling operation in a very easy manner. The ball chain may have an endless belt structure.

Each of the loaded-ball running grooves and the loaded-ball running counter-grooves may be formed into a circular arc-groove shape having a single circular arc in a cross-section. Such a circular arc-groove shape permits the ball to move relatively freely in the grooves in their width direction. It is therefore preferable to adopt an increased depth structure of the grooves and an approximation structure of the cross-sectional shape thereof to the contour of the ball as in the present invention.

Each of the loaded-ball running grooves and the loaded-ball running counter-grooves may be formed into a Gothic arc-groove shape having two circular arcs in a cross-section.

Such a Gothic arc-groove shape can prevent more effectively the ball from moving in the width direction of the grooves in comparison with the circular arc-groove shape. The support of the balls with the use of the ball chain permits, in the same manner as the circular arc-groove shape, to increase the depths of the loaded-ball running grooves and the loaded-ball running counter-grooves as much as possible, thus preventing the occurrence of the edge load.

Each of any one of a set of the loaded-ball running grooves formed on the movable block and a set of the loaded-ball running counter-grooves formed on the guide rail is formed into the circular arc-groove shape having the single circular arc in the cross-section, and each of another thereof is formed into a Gothic arc-groove shape having two circular arcs in the cross-section.

The above-mentioned feature achieves a three-point contact structure of the ball. Such a structure provides an intermediate characteristic property between a two-point contact structure and a four-point contact structure so that a misalignment compensation property can become more excellent in comparison with the four-point contact structure having a pair of Gothic arc-grooves and rigidity in the swinging direction and the vertical direction can be improved in comparison with the two-point contact structure having a pair of circular arc-grooves.

Each of the loaded-ball running counter-grooves of the guide rail may be formed into the circular arc-groove shape and each of the corresponding loaded-ball running grooves of the movable block may be formed into the Gothic arc-groove shape.

Each of the loaded-ball running counter-grooves of the guide rail may be formed into the Gothic arc-groove shape and each of the corresponding loaded-ball running grooves of the movable block may be formed into the circular arc-groove shape.

The circular arc of the loaded-ball running grooves and the loaded-ball running counter-grooves may have a radius of curvature, which is determined to be within a range of from 50.5 percent to 52.0 percent of the diameter of the ball.

The circular arc of the grooves of the conventional apparatus is determined to be substantially identical to 52 percent of the diameter of the ball, thus permitting the ball to move relatively freely in the grooves. In view of this fact, it is advisable to limit the circular arc of the grooves to under 52 percent of the diameter of the ball.

With an excessively small circular arc of the grooves, a sudden slide of the ball may occur. It is preferable to limit the circular arc of the grooves to at least 50.5 percent of the diameter of the ball in practical use.

A chain-guide member may be provided on the surface of the movable block, which is in a vicinity of the loaded-ball running groove thereof, the chain-guide member having projections that come into contact with the joint members to prevent the ball chain from coming off the movable block. The projections of the chain-guide member can prevent the ball chain from sagging down when the guide rail is pulled out of the movable block. In case where the ball chain has a non-endless belt structure, it is possible to prevent effectively the ball chain from sagging down.

At least one of the ball return passage and an inner peripheral portion of the ball direction changing passage may be formed of a resin-formed body, which is integrally formed with the block body.

Such a structure permits a precise formation of the endless circulation passage so as to carry out a smooth guidance of the ball in cooperation with the guidance of ball circulation with the use of the ball chain.

At least one of the ball return passage, an inner peripheral portion of the ball direction changing passage and the chain-guide member may be formed of a resin-formed body, which is integrally formed with the block body.

In this case, the endless circulation passage can also formed precisely so as to carry out a smooth guidance of the ball in cooperation with the guidance of ball circulation with the use of the ball chain. In addition, the chain-guide member can also be formed precisely, thus preventing it from coming into contact with the ball chain in an unfavorable manner.

A table guide apparatus of the present invention comprises:
two sets of the linear motion guide apparatus each having two ball trains as described above;
   wherein:
the guide rails of the two sets of the linear motion guide apparatus are fixed on a stationary bed so as to be parallelly spaced apart from each other, and a table is mounted on the movable blocks of said two sets of the linear motion guide apparatus in a state that moments having functions of swinging the movable blocks around their longitudinal axis relative to the guide rails in opposite directions are given to the movable blocks;
in one set of the linear motion guide apparatus, both a contact angle line connecting contact points of the ball, which locates in a left-hand side relative to a longitudinal central axis of the movable block, with the loaded-ball running groove and the loaded-ball running counter-groove and a contact angle line connecting contact points of the ball, which locates in a right-hand side relative to the longitudinal central axis thereof, with the loaded-ball running groove and the loaded-ball running counter-groove incline in a same direction by a prescribed inclination angle relative to a horizontal plane passing through a central axis of the guide rail in a state where the stationary bed is placed horizontally; and
in another set of the linear motion guide apparatus, both a contact angle line connecting contact points of the ball, which locates in a left-hand side relative to a longitudinal central axis of the movable block, with the loaded-ball running groove and the loaded-ball running counter-groove and a contact angle line connecting contact points of the ball, which locates in a right-hand side relative to the longitudinal central axis thereof, with the loaded-ball running groove and the loaded-ball running counter-groove incline in a direction, which is opposite to said direction, by said prescribed inclination angle.

The linear motion guide apparatus itself can bear the vertical direction load, the lateral direction load and the moment load, while suppressing play, as mentioned above. Arrangement of the movable blocks of the two sets of the linear motion guide apparatus in an inclined state makes it possible to suppress play effectively in the table guide apparatus.

Measures to be adopted to incline the movable block may include the formation of the surface of the movable block, onto which the table is mounted, into an inclined surface, the use of a shim locating between the upper surface of the movable block and the lower surface of the table, or any other measures.

The above-mentioned measures are to incline the both movable blocks in an active manner. When the guide rails of the two sets of the linear motion guide apparatus are fixed on the stationary bed so as to parallelly spaced apart from each other and the table is mounted on these movable blocks in a usual manner, there exists an inevitable small fitting error. The fitting error can be compensated and the movable blocks simultaneously incline, resulting in change in the contact angle. According to the linear motion guide apparatus of the present invention in which the loaded-ball running grooves and the loaded-ball running counter-groove have a shape in its cross section, which approximates a contour of the ball, the small fitting error causes the contact angle of the ball to vary so as to provide the inclined state of the movable blocks. It is therefore possible to suppress play in the table guide apparatus.

Now, a comparison will be made among the four-point contact structure in which the ball of the linear motion guide apparatus is held between the pair of Gothic arc-grooves, the two-point contact structure in which the ball thereof is held between the pair of circular arc-grooves and the three-point contact structure in which the ball thereof is held between the Gothic arc-groove and the circular arc-groove. The four-point contact structure can provide almost no play, but has a low misalignment compensation property. The two-point contact structure has a high misalignment compensation property, but provides much play. It is therefore effective to incline the movable blocks having the two-point contact structure in an active manner as mentioned above to suppress the play. The three-point contact structure has a middle misalignment compensation property and can provide the play, which is less than that of the two-point contact structure and more than that of the four-point contact structure.

### Brief Description of Drawings:

FIG. 1 illustrates a linear motion guide apparatus of the first embodiment of the present invention, FIG. 1(a) is a front-side vertical cross-sectional view of the apparatus, FIG. 1(b) is an enlarged cross-sectional view illustrating a contact state of a ball, FIG. 1(c) is a plan view of the apparatus, a half portion of which is shown in cross section, FIG. 1(d) is an enlarged cross-sectional view of a direction changing portion and FIG. 1(e) is an enlarged cross-sectional view illustrating a contact state of the ball in a modification of a joint member of a ball chain;
FIG. 2(a) is a front view illustrating an end plate of a movable block of the linear motion guide apparatus as shown in FIG. 1, a half portion of which is shown in cross section, FIG. 2(b) is a side view of the end plate thereof, FIG. 2(c) is a partial front view of the ball chain and FIG. 2(d) is a plan view of the ball chain;
FIG. 3(a) is a front view of a table guide apparatus into which the linear motion guide apparatus as shown in FIG. 1 are incorporated, FIG. 3(b) is a descriptive view illustrating contact angles of the left-hand linear motion guide apparatus as shown in FIG. 3(a) and FIG. 3(c) is a descriptive view illustrating contact angles of the right-hand linear motion guide apparatus as shown in FIG. 3(a);
FIG. 4 illustrates the linear motion guide apparatus of the second embodiment of the present invention, FIG. 4(a) is a front-side vertical cross-sectional view of the apparatus and FIG. 4(b) is an enlarged cross-sectional view illustrating a contact state of the ball;
FIG. 5 illustrates the linear motion guide apparatus of the third embodiment of the present invention, FIG. 5(a) is a front-side vertical cross-sectional view of the apparatus and FIG. 5(b) is an enlarged cross-sectional view illustrating a contact state of the ball;
FIG. 6(a) is a front view of the table guide apparatus into which the linear motion guide apparatus as shown in FIG. 5 are incorporated, FIG. 6(b) is a descriptive view illustrating contact angles of the left-hand linear motion guide apparatus as shown in FIG. 6(a) and FIG. 6(c) is a descriptive view illustrating contact angles of the right-hand linear motion guide apparatus as shown in FIG. 6(a);
FIG. 7 illustrates the linear motion guide apparatus of the fourth embodiment of the present invention, FIG. 7(a) is a front-side vertical cross-sectional view of the apparatus and FIG. 7(b) is an enlarged cross-sectional view illustrating a contact state of the ball;
FIG. 8 illustrates the first example of the linear motion guide apparatus of the fifth embodiment of the present invention, FIG. 8(a) is a front-side vertical cross-sectional view of the apparatus and FIG. 8(b) is an enlarged cross-sectional view illustrating a contact state of the ball;
FIG. 9 illustrates the second example of the linear motion guide apparatus of the fifth embodiment of the present invention, FIG. 9(a) is a front-side vertical cross-sectional view of the apparatus and FIG. 9(b) is an enlarged cross-sectional view illustrating a contact state of the ball;
FIG. 10(a) is a descriptive view illustrating a constructional example of the table guide apparatus into which the linear motion guide apparatus as shown in FIG. 8 is incorporated, FIG. 10(b) is a descriptive view illustrating a constructional example of the table guide apparatus into which the linear motion guide apparatus as shown in FIG. 9 is incorporated, FIGS. 10(c) and 10(d) are descriptive views illustrating change in a contacting state of the ball in the three-point contact structure; and
FIG. 11 is a view illustrating a structure for preventing the ball from coming off in the conventional linear motion guide apparatus.

### Best Mode for Carrying Out the Invention:

### First Embodiment

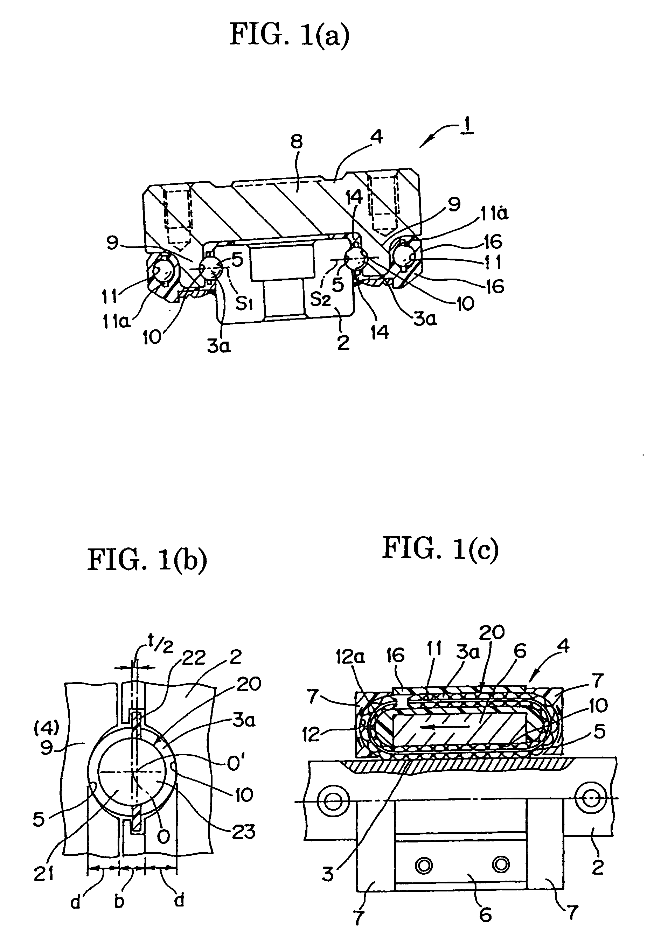

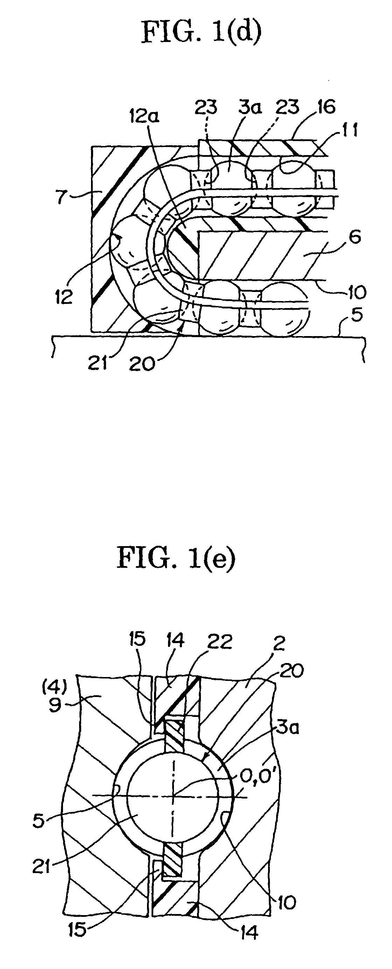

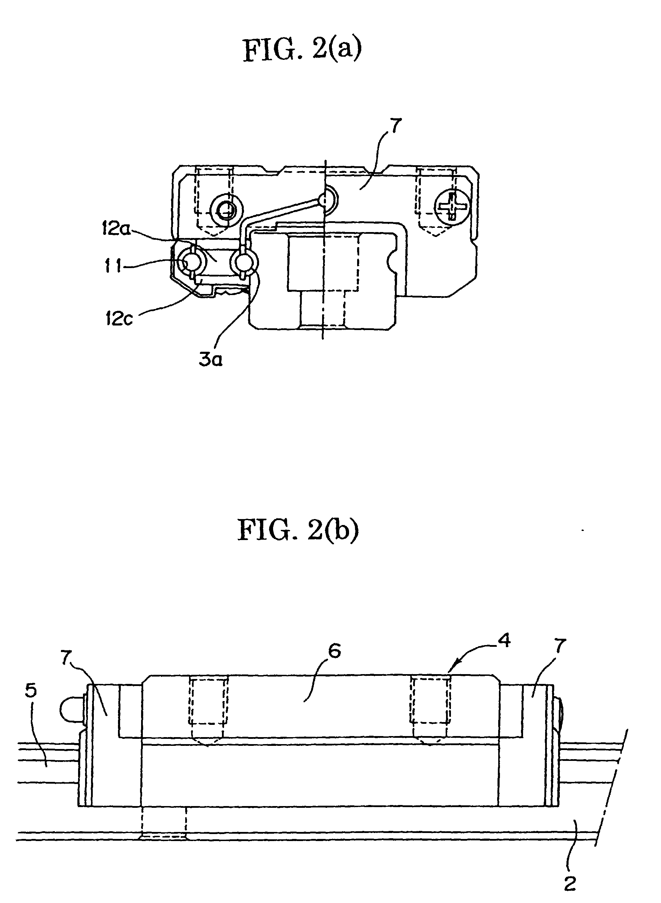

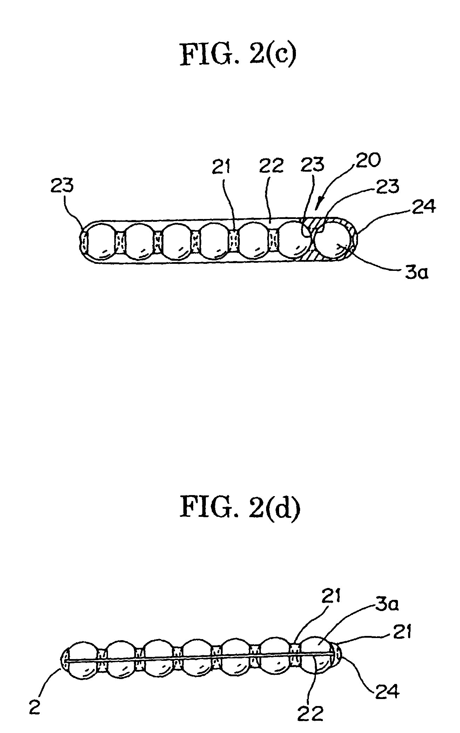

FIGS. 1 and 2 illustrate a linear motion guide apparatus of the first embodiment of the present invention.

In FIG. 1, the reference numeral "1" denotes the whole linear motion guide apparatus. The linear motion guide apparatus 1 comprises a guide rail 2 and a movable block 4 provided movably on the guide rail 2 through a plurality of balls 3a.

The guide rail 2 is formed of an elongated member having a square cross-sectional shape. The guide rail 2 is designed so as to guide the movable block 4 through two trains of balls each of which is provided on each of opposite sides of the guide rail 2. The guide rail 2 is provided on each of the opposite sides thereof with a single loaded-ball running counter-groove 5 extending over the entirety of the guide rail 2 in its longitudinal direction, thus providing the total number of counter-groove of two. The loaded-ball running counter-grooves 5, 5 are formed on the opposite vertical side surfaces of the guide rail 2, respectively.

The movable block 4 is composed of a block body 6 and a pair of end plates 7, which are provided at the opposite ends of the block body 6 so as to serve as a direction changing passage forming member. The block body 6 is provided with a horizontal portion 8 facing the upper surface of the guide rail 2 and with a pair of support leg portions 9, 9 facing the opposite side surfaces of the guide rail 2, thus providing a U-shaped cross-section. The respective support leg portion 9 has on its inner surface a loaded-ball running groove 10, which corresponds to the respective loaded-ball running counter-groove 5 formed on the opposite side surfaces of the guide rail 2. The respective support leg portion 9 has in its inside a ball return passage 11, which is formed into a tunnel-shape so as to extend linearly in parallel with the loaded-ball running groove 10.

The end plate 7has a U-shape, which is similar to the cross-section of the block body 6. The respective end plates 7, 7 connect the respective loaded-ball running grooves 10, 10 with the respective ball return passage 11, 11 to form ball direction changing passages for forming endless circulation passages for the balls.

Contact angle lines S1, S2, which connect the contact points of the balls of the two trains of balls with the corresponding loaded-ball running counter-grooves 5, 5 and the corresponding loaded-ball running grooves 10, 10, are designed to be horizontal in principle.

The two trains 3, 3 of balls are maintained by means of two ball chains 20 so as to circulate in the endless circulation passages. Each of the ball chains 20 has ball-supporting members 21 and joint members 22. The ball-supporting members 21 locate between the adjacent two balls 3a for forming the train 3 of balls. The joint members 22 have flexibility and connect the adjacent two ball-supporting members 21 with each other. Each of the joint members 22 is formed into a thin-belt shape. The ball chain 20 has its opposite ends, which are not connected to each other, thus forming a non-endless belt structure. The ball chain 20 is provided on its front and rear ends with crowning portions 24, respectively.

The opposite ends of the ball chain 20 may be connected to each other so as to form an endless belt structure.

Each of the ball supporting members 21 is provided on its opposite ends with spherical supporting recesses 23 for receiving the spherical crown portion of the ball 3a. The ball 3a is held between the adjacent two ball supporting members 21 that locate in the front and rear sides of the ball 3a in the running direction thereof.

The joint member 21 projects toward the adjacent side edge portion of the movable block 4 to the loaded-ball running groove 10 into a gap between the opposing surfaces of the movable block 4 and the guide rail 2.

A chain-guide member 14 is provided on the adjacent opposite side edge portions of the movable block 4 to the loaded-ball running groove 10 to guide the ball chain 20. The chain-guide member 14 has projections 15 that come into contact with the joint members 22 to prevent the ball chain 20 from coming off the movable block 4. The ball 3a is held in the supporting recesses 23 of the adjacent ball supporting members 21 of the ball chain 20. Accordingly, it is possible to prevent the balls 3a from coming off the movable block 4 by means of the ball chain 20. The ball chain 20 is provided on its front and rear ends with the crowning portions 24, respectively, as mentioned above. The front end of the ball chain 20 is guided into the chain-guide member 14 through the crowing portion 24 so as to perform a circulation motion. Especially, the crowing portion 24 serves as a member for guiding the ball chain assembly when the assembly is inserted into the groove.

The joint member 22 locates as shown in FIG. 1(b) so that a point " O' " locating on the line connecting the central points of the opposite joint members 22 in its thickness direction is shifted from the center "O" of the ball 3a toward the movable block 4 by a prescribed distance, for example, by a distance corresponding to half "t/2" of the thickness "t" of the joint member 22 in accordance with the embodiment as shown in FIG. 1(b). The projections 15 of the chain-guide member 14 is shifted from the center "O" of the ball 3a in the opposite direction to the shifting direction of the joint members 22.

The distance between the deepest point of the loaded-ball running counter-groove 5 and the deepest point of the loaded-ball running groove 10 is substantially identical with the diameter "D" of the ball 3a. It is necessary to decrease the distance "b" between the guide rail 2 and the movable block 4 in order to increase the depths "d" of the loaded-ball running counter-groove 5 and the loaded-ball running groove 10. The projection 15 of the chain-guide member 14 is placed on the joint member 22 of the ball chain 20 within the gap corresponding the above-mentioned distance "b". It is therefore suitable to locate the center "O" of the ball 3a in the central point of the total thickness of the projection 15 and the joint member 22. In this embodiment, the projection 15 has substantially the same thickness as that of the joint member 22. Accordingly, the above-mentioned point " O' " concerning the joint members 22 is shifted from the center "O" of the ball 3a toward the movable block 4 by a distance corresponding to about half of the thickness "t" of the joint member 22.

When the point " O' " concerning the joint members 22 is identical with the center "O" of the ball 3a as shown in FIG. 1(e), the joint members 22 project from the center "O" of the ball 3a toward the guide rail 2 by a distance corresponding to half "t/2" of the thickness "t" of the joint member 22. It is therefore necessary to shift the projections 15 toward the guide rail 2 by a distance corresponding to the above-mentioned projection length of the joint members 22, resulting in decrease in depth of the loaded-ball running counter-groove 5 accordingly. It is therefore advantageous to shift the point " O' " concerning the joint members 22 from the center "O" of the ball 3a in a manner as shown in FIG. 1(b), when the projections 15 are provided.

Each of the loaded-ball-running counter-groove 5 and the loaded-ball-running groove 10 is formed into the circular arc-groove shape having a single circular arc in its cross-section. The circular arc preferably has a radius of curvature, which is determined to be within the range of from 50.5 percent to 52.0 percent of the diameter of the ball.

In the above-described linear motion guide apparatus, the respective ball 3a is held at its front and rear sides between the adjacent two ball-supporting members 21. It is therefore possible to prevent the ball 3a from coming off the loaded-ball-running groove, even when the guide rail 2 is pulled out of the movable block 4. The ball-supporting members 21 locate within the tunnel-shaped space, which is defined by the loaded-ball running groove 10 and the loaded-ball running counter-groove 5 so that the ball-supporting members 21 can be made large to the extent that their size is substantially identical with the diameter of the ball 3a, irrespective of the depths of the loaded-ball running groove 10 and the loaded-ball running counter-groove 5. It is therefore possible to support the balls 3a surely.

The joint member 22, which locates between the opposing surfaces of the movable block 4 and the guide rail 2, has no function of directly supporting the ball 3a, with the result that the thickness of the joint member 22 can be decreased. It is therefore possible to bring the opposing surfaces of the movable block 4 and the guide rail 2 into the closer relationship to the joint member 22 having the decreased thickness to increase the depths of the loaded-ball running groove 10 and the loaded-ball running counter-groove 5 as much as possible.

The increase in depths of the loaded-ball running groove 10 and the loaded-ball running counter-groove 5 makes it possible to prevent the ball 3a from coming into contact with the edges of the grooves 5, 10 even when the deviation of the contact points of the ball 3a with the grooves 5, 10 in their width direction occurs. There can accordingly be avoided the occurrence of the problem of the edge load, in which stress concentrates in the edges of the grooves 5, 10. It is therefore possible to extend the range of an area within which the ball 3a can come into contact with the grooves 5, 10 in their width direction, thus permitting selection of an appropriate contact angle within an extended range thereof.

The fitting length of the ball 3a into the loaded-ball-running groove 10 and the loaded-ball-running counter-groove 5 in their depth direction also increases. Even when there applies the load having a function of shifting parallelly the opposing surfaces of the movable block 4 and the guide rail 2 in opposite directions to each other in the width direction of the grooves 5, 10, the contact points of the ball 3a with the grooves 5, 10 deviate within an intermediate region between the deepest point of the grooves 5, 10 and the edges thereof, thus making it possible to prevent the ball 3a from coming into contact with the edges of the grooves 5, 10.

The circular arc of each of the loaded-ball running groove 10 and the loaded-ball running counter-groove 5 has the radius of curvature that is determined to be within the range of from 50.5 percent to 52.0 percent of the diameter of the ball, which approximates the radius thereof. It is therefore possible to prevent the ball 3a from unfavorably moving in the grooves 5, 10 in a perpendicular direction thereto.

It is preferable to determine the depths of the loaded-ball running groove 10 and the loaded-ball-running counter-groove 5 so as to be at least about 25 percent of the diameter of the ball. The depths of the grooves 5, 10, which are identical to the length of 25 percent of the diameter of the ball, can be expressed by a contact angle of the ball of 30 degrees. Even when the contact angle of the ball is increased up to 45 degrees, there is a sufficiently long distance between the edges of the grooves 5, 10 and the contact point of the ball thereto, thus preventing the ball from coming into contact with the edges of the grooves 5, 10. It is therefore possible to select the contact angle of up to 45 degrees.

The single train of balls is provided on each of the opposite vertical side walls of the guide rail 2. The lateral direction load, which has a function of urging the support leg portions 9, 9 of the movable block 4 against the opposite side surfaces of the guide rail 2, applies so as to compress the ball 3a locating between the guide rail 2 and the grooves 5, 10. The ball 3a bears the lateral direction load without causing undesirable movement of the movable block.

When there applies radial load having a function of pressing the movable block 4 toward the guide rail 2, inverse-radial load having a function of lifting the movable block 4 from the guide rail 2 or moment load having a function of swinging the movable block 4 around the guide rail 2, there is generated force having a function of causing the loaded-ball running groove 10 and the loaded-ball running counter-groove 5, between which the balls 3a locate, to deviate parallelly from each other in the opposite directions, i.e., in a sharing direction. The circular arc of each of the loaded-ball running groove 10 and the loaded-ball running counter-groove 5 has the radius of curvature that is determined to be within the range of from 50.5 percent to 52.0 percent of the diameter of the ball, which approximates the radius thereof. It is therefore possible to prevent effectively the deviation of the ball 3a, with the result that the movable block can be supported without causing any undesirable movement thereof.

The ball return passage 11, the inner peripheral portion 12a of the ball direction changing passage 12 and the chain-guide member 14 are formed of a resin-formed body, which is integrally formed with the block body 6. The ball return passage 11, the ball direction changing passage 12 and the chain-guide member 14 are formed on the basis of the loaded-ball running groove 10.

Guide bodies 11a, 12c for guiding the joint members 22 of the ball chain 20 are provided in the ball return passage 11 and the inner peripheral portion 12a of the ball direction changing passage 12. The integral formation of these components of the resin-formed body 16 causes the guide bodies 11a, 12c and the chain-guide member 14 to be connected smoothly with each other, thus performing a smooth circulation guide of the ball chain 20. A precise positional determination of the chain-guide member 14 having the projection 15 can be made on the basis of the loaded-ball running groove 10. It is therefore possible to form an appropriate gap between the joint member 22 of the ball chain 20 and the chain-guide member 14, thus preventing them from coming into contact with each other in an unfavorable manner under a heavy load.

The integral formation of the inner peripheral portion 12a of the ball direction changing passage 12 with the loaded-ball running groove 10 as well as of the ball return passage 11 with the inner peripheral portion 12a of the ball direction changing passage 12 causes these components to be connected smoothly with each other, thus performing a smooth circulation of the balls 3a.

### Table Guide Apparatus

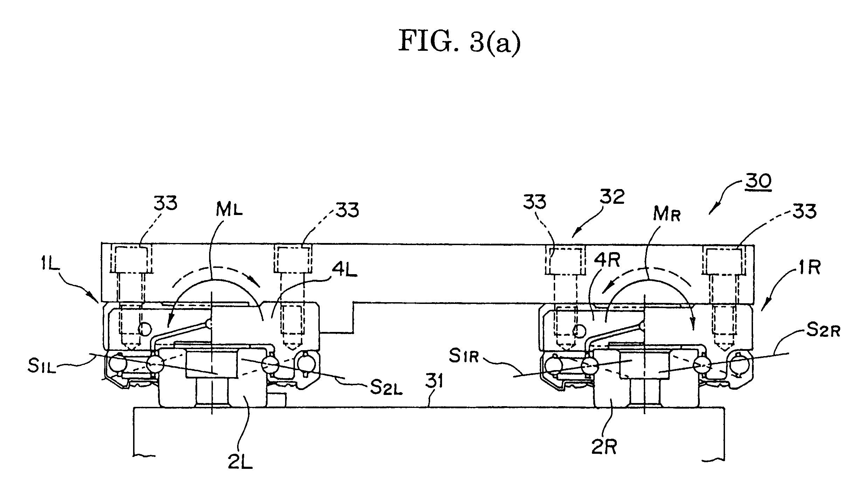

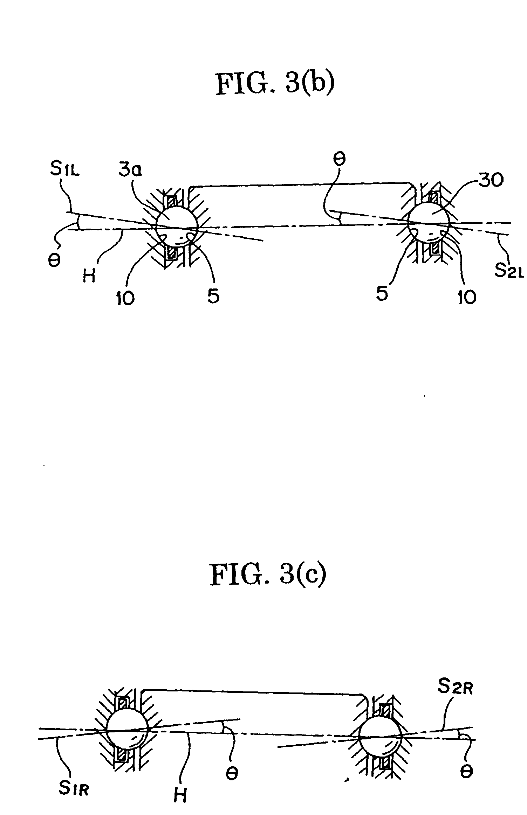

FIG. 3 shows a table guide apparatus in which the linear motion guide apparatus of the first embodiment of the present invention are incorporated.

In the table guide apparatus 30, a table 32 is supported on a stationary bed 31 with the use of two sets of the linear motion guide apparatus 1L, 1R. The two guide rails 2L, 2R are fixed on the stationary bed 31 so as to be parallelly spaced apart from each other. The table 32 is mounted on the upper surfaces of the movable blocks 4L, 4R that are supported on the guide rails 2L, 2R, respectively.

In this embodiment, moments ML, MR applying in the opposite directions are given to the movable blocks 4, 4 in a state that the two sets of the linear motion guide apparatus 1L, 1R are provided between the stationary bed 31 and the table 32.

The table guide apparatus has such a contact structure in which, in the left-hand linear motion guide apparatus, both a contact angle line S1L connecting contact points of the ball 3a, which locates in the left-hand side of the movable block 4L, with the grooves 5, 10 and a contact angle line S2L connecting contact points of the ball 3a, which locates in the right-hand side thereof, with the grooves 5, 10 incline down toward the central side of the stationary bed 31 by a prescribed inclination angle θ relative to a horizontal line H, on the one hand, and in the right-hand linear motion guide apparatus, both a contact angle line S1R connecting contact points of the ball 3a, which locates in the left-hand side of the movable block 4R, with the grooves 5, 10 and a contact angle line S2R connecting contact points of the ball 3a, which locates in the right-hand side thereof, with the grooves 5, 10 incline down toward the central side of the stationary bed 31 by a prescribed inclination angle θ relative to the horizontal line H, on the other hand.

When the directions of the moments are inverted, there is obtained a contact structure in which the directions of the contact angle lines S1L, S2L; S1R, S2R incline up toward the central side of the table 32 relative to the horizontal line H, as shown in FIG. 3 in dotted lines.

Bolts 33, 33, which are provided on the upper surface of the movable blocks 4L, 4R, are spaced from each other in their width direction in view of the application of the moments.

Measures to be adopted to incline the movable blocks 4L, 4R may include the formation of the surfaces of the movable blocks 4L, 4R, onto which the table is mounted, into an inclined surface, the use of shims locating between the upper surfaces of the movable blocks 4L, 4R and the lower surface of the table, or any other measures.

The above-mentioned measures are to incline the both movable blocks in an active manner. In usual cases, the movable blocks tend to be mounted in an inclined state due to an inevitable fitting error, without using any one of these measures. In the linear motion guide apparatus of the present invention, the loaded-ball running grooves 10 and the loaded-ball running counter-groove 5 have a shape in its cross section, which approximates the contour of the ball 3a, and the small fitting error causes the contact angle of the ball 3a to vary so as to provide the inclined state of the movable blocks.

The assembly of the table guide apparatus, which has been carded out in this manner, makes it possible to support the table by means of the two sets of the linear motion guide apparatus 1L, 1R so as to bear not only the lateral direction load, but also the radial load applying from above and the lifting load applying from below without causing undesirable movement of the movable blocks. All the loads, i.e., the loads in the vertical and horizontal directions and the moment loads, can be born without causing undesirable movement of the movable blocks.

Now, description will be given of the other embodiment of the present invention. This embodiment has the same fundamental structure as that of the first embodiment of the present invention. Only different matters from the first embodiment will be described. The same reference numerals as in the first embodiment are given to the same structural components and the description thereof will be omitted.

### Second Embodiment

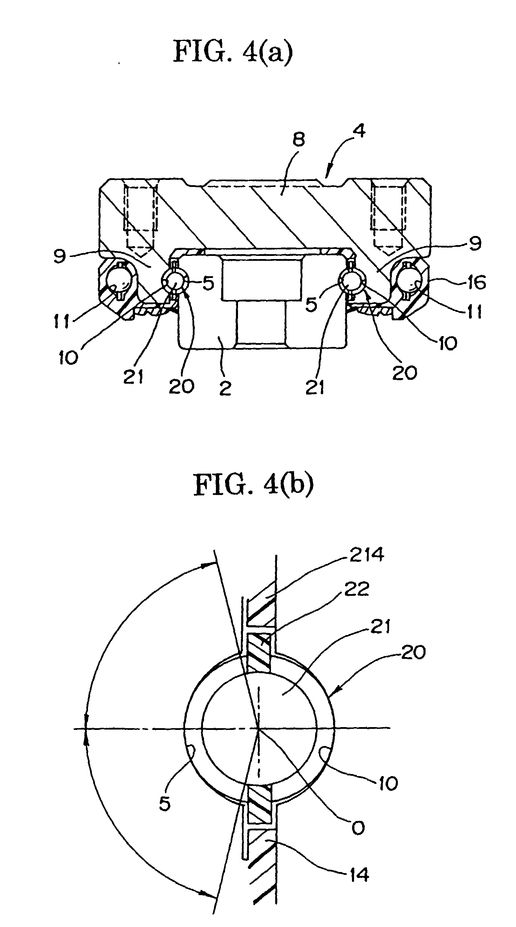

FIG. 4 shows the second embodiment of the present invention.

In the second embodiment, a chain-guide member 214 for supporting the ball chain 20 has no projection unlike the first embodiment.

In the second embodiment, the structure in which the chain-guide member 214 has no projection in the edges of the loaded-ball running groove 10, makes it possible to decrease the distance between the movable block 4 and the guide rail 2 in comparison with the first embodiment. The depths of the loaded-ball running groove 10 and the loaded-ball-running counter-groove 5 can therefore be increased. In this case, the chain-guide member 214 makes a positional guide for the ball chain in the width direction of the grooves.

In this case, it is preferable to cause the central point of the joint member 22 in its thickness direction to be identical with the center "O" of the ball. The shift of the central point of the joint member 22 from the center of the ball requires the increased distance between the movable block 4 and the guide rail 2 accordingly, thus makes it impossible to increase the depths of the loaded-ball running groove 10 and the loaded-ball running counter-groove 5 accordingly.

### Third Embodiment

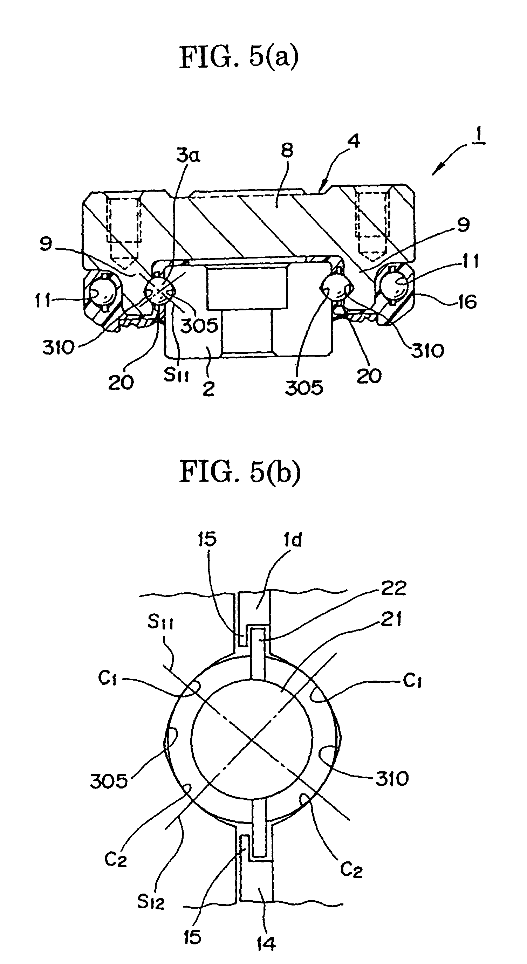

FIG. 5 shows the third embodiment of the present invention.

In the third embodiment, the cross-section of each of the loaded-ball running groove 310 and the loaded-ball running counter-groove 305 is changed into a Gothic arc-groove shape, in which two circular arcs C1, C2 are combined with each other and a longitudinal line passing through the deepest point of each of the grooves 305, 310 locates between these arcs.

In this case, there is obtained a contact angle structure in which the respective ball 3a comes at two points on its periphery into contact with each of the loaded-ball running groove 310 and the loaded-ball running counter-groove 305, thus providing the total number of contact points of four. In such a contact angle structure, two contact angle lines S11, S12; S21, S22 for each ball 3a are formed into diagonal lines. Such a structure permits to bear the loads applied from any one of horizontal and vertical directions without causing unfavorable movement of the movable block.

When the loaded-ball running groove 310 and the loaded-ball running counter-groove 305 are formed into such a Gothic arc-groove shape, it is preferable to determine the radius of curvature of the circular arcs C1, C2 of the loaded-ball running groove 310 and the loaded-ball running counter-groove 305 so as to be identical with a length of about 55 percent of the diameter of the ball.

It is preferable to determine the depth of the loaded-ball running groove 310 and the loaded-ball running counter-groove 305 so as to be identical with a length of about 40 percent of the diameter of the ball.

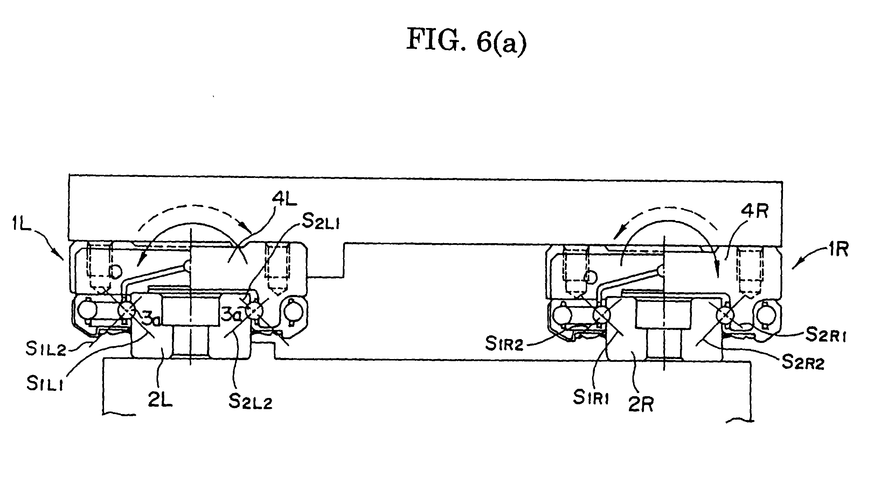

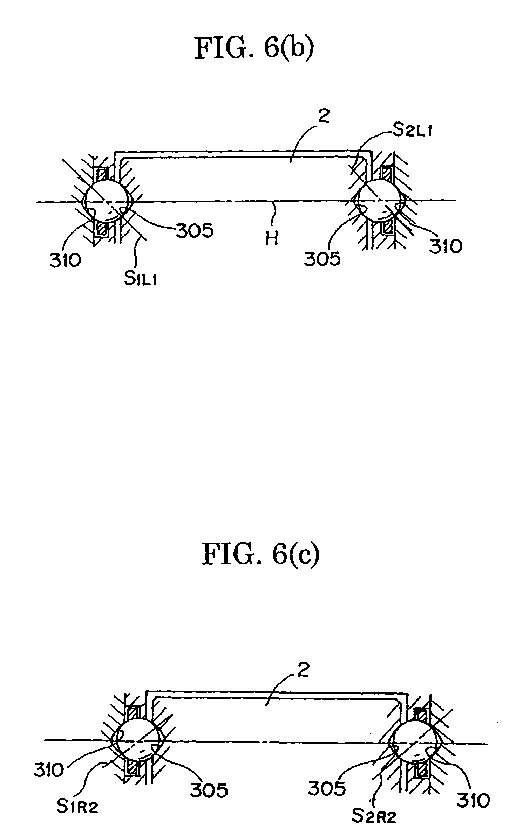

FIG. 6 shows a table guide apparatus in which the linear motion guide apparatus as shown in FIG. 5 are used.

The table guide apparatus is also designed so that moments ML, MR in the opposite directions to each other are applied to the movable blocks 4, respectively, in the same manner as in the table guide apparatus as shown in FIG. 3, in a state in which the two sets of linear motion guide apparatus 1L, 1R are fitted between the stationary bed 31 and the table 32.

Accordingly, in the obtained contact angle structure, the directions of the contact angle lines S1L1, S2L2; S1R1, S2R2 incline down toward the central side of the stationary bed 31 relative to the horizontal line H.

When the directions of the moments are inverted, there is obtained a contact structure in which the directions of the contact angle lines S1L2, S2L1; S1R2, S2R1 incline up toward the central side of the table 32 relative to the horizontal line H, as shown in FIG. 6 in dotted lines.

### Fourth Embodiment

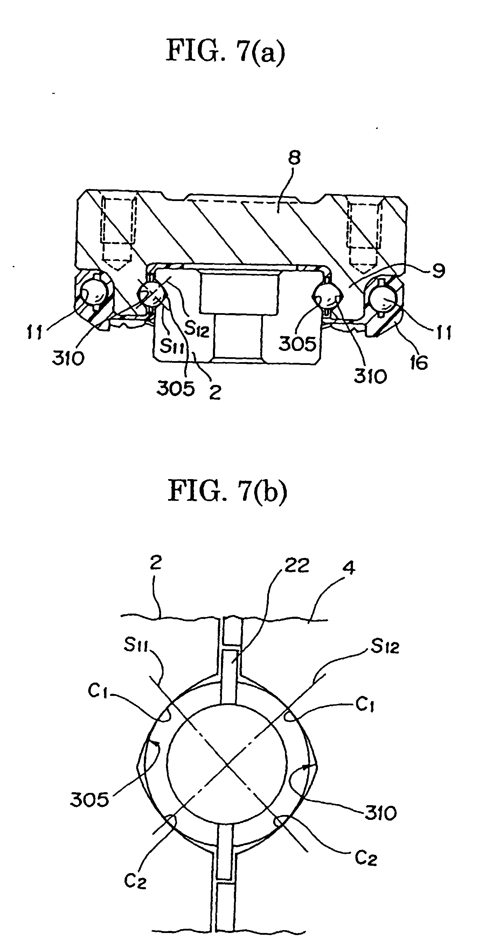

FIG. 7 shows the fourth embodiment of the present invention.

In the fourth embodiment, each of the loaded-ball running groove 310 and the loaded-ball running counter-groove 305 is formed into the Gothic arc-groove shape, in which the two circular arcs C1, C2 are combined with each other, in the same manner as in the third embodiment described above, and the chain-guide member for supporting the ball chain has no projection in the edges of the loaded-ball running groove 310 of the movable block 4 in the same manner as in the second embodiment described above.

### Fifth Embodiment

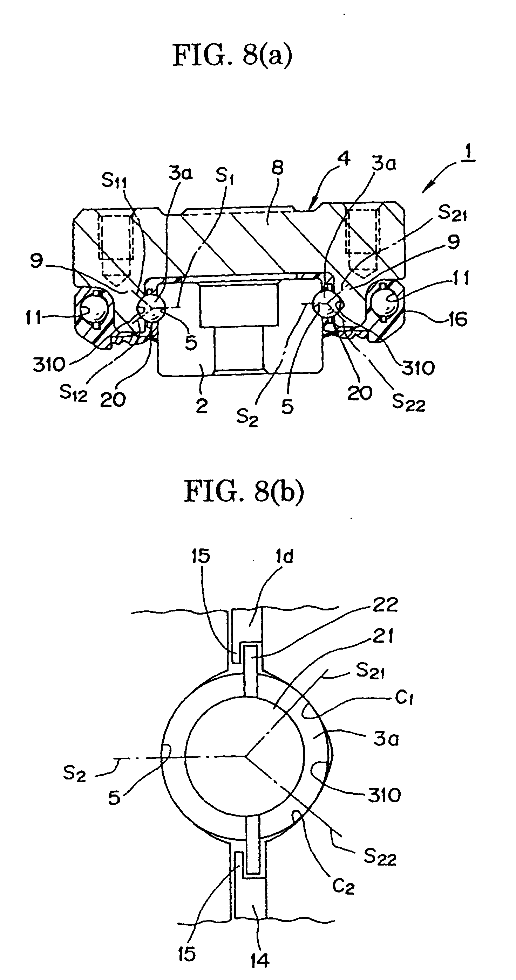

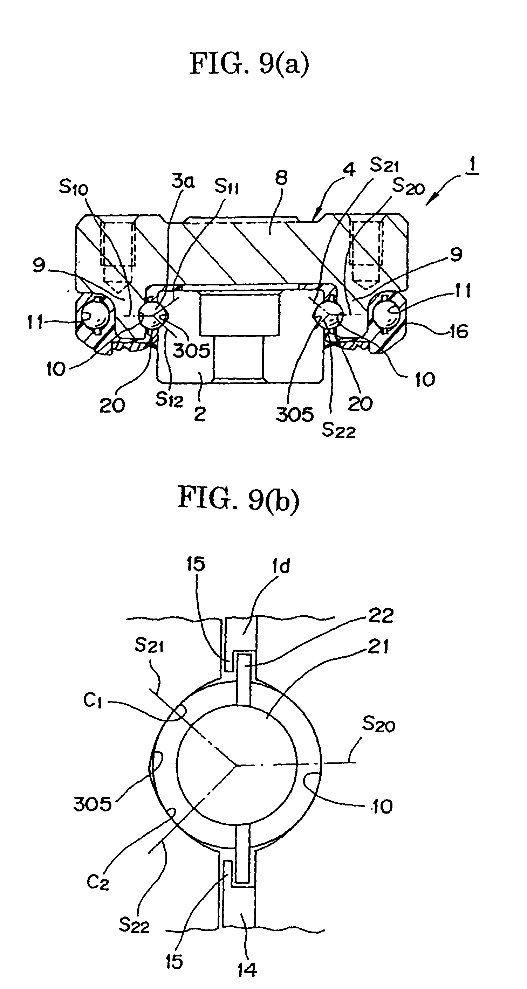

FIGS. 8 and 9 show the fifth embodiment of the present invention.

In the above-described first to fourth embodiments, the loaded-ball running groove and the loaded-ball running counter-groove have the two-points contact structure in which the ball comes into contact with the pair of circular arc-grooves, or the four-points contact structure in which the ball comes into contact with the pair of Gothic arc-grooves. In the fifth embodiment, any one of the loaded-ball running groove and the loaded-ball running counter-groove, which are formed on the movable block 4 and the guide rail 2, respectively, has the circular arc-shape, and the other of them has the Gothic arc-shape. Such a combination of these groove shapes provides a three-point contact structure for the ball.

Such a structure can provide an intermediate characteristic property between the two-point contact structure and the four-point contact structure so that a misalignment compensation property can become more excellent in comparison with the four-point contact structure and rigidity in the swinging direction and the vertical direction can be improved in comparison with the two-point contact structure.

The example as shown in FIG. 8 has a combination of the Gothic arc-groove structure, which is applied on each of the loaded-ball running grooves 310 formed on the opposite sides of the movable block 4, with the circular arc-groove structure, which is applied on each of the loaded-ball running counter-grooves 5 formed on the opposite sides of the guide rail 2.

According to such a combination, deviation of the ball 3a from the loaded-ball running counter-groove 5 of the guide rail in the width direction of the groove becomes larger than deviation of the ball 3a from the loaded-ball running groove 310 of the movable block 4 in the width direction of the groove.

The example as shown in FIG. 9 has a combination of the circular arc-groove structure, which is applied on each of the loaded-ball running grooves 10 formed on the opposite sides of the movable block 4, with the Gothic arc-groove structure, which is applied on each of the loaded-ball running counter-grooves 305 formed on the opposite sides of the guide rail 2.

According to such a combination, deviation of the ball 3a from the loaded-ball running groove 10 of the movable block 4 in the width direction of the groove becomes larger than deviation of the ball 3a from the loaded-ball running counter-groove 305 of the guide rail 2 in the width direction of the groove.

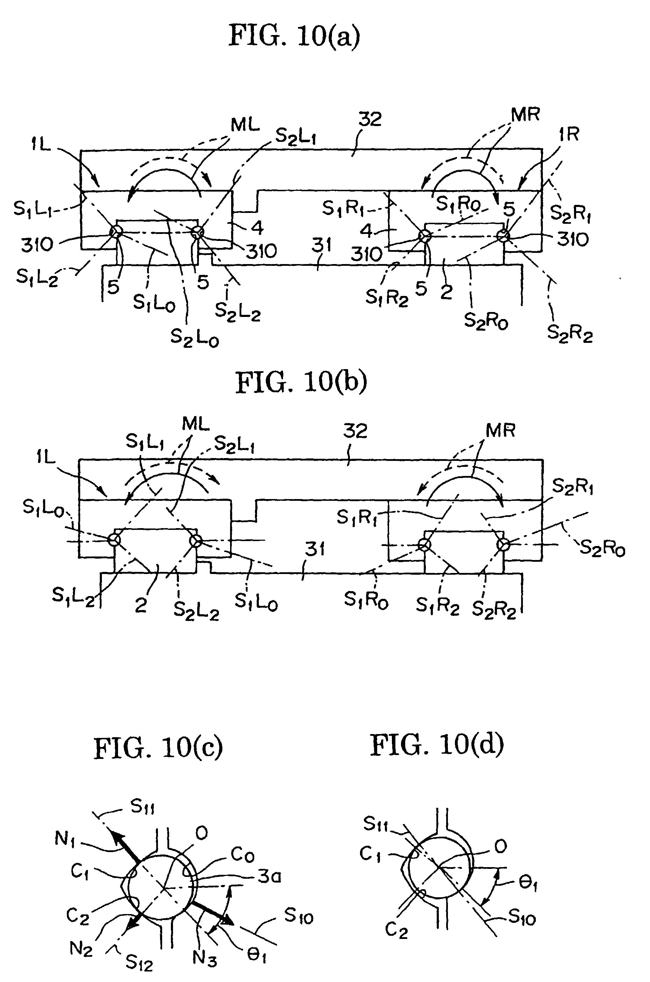

FIG. 10(a) shows a structural example of the table guide apparatus in which the linear motion guide apparatus as shown in FIG. 8 are used, and FIG. 10(b) shows a structural example of the table guide apparatus in which the linear motion guide apparatus as shown in FIG. 9 are used.

The table guide apparatus is also designed so that moments ML, MR in the opposite directions to each other (i.e., the outward tilting directions in FIG. 10(a) in solid lines) are applied to the movable blocks 4, respectively, in the same manner as in the table guide apparatus as shown in FIG. 3, in a state in which the two sets of linear motion guide apparatus 1L, 1R are fitted between the stationary bed 31 and the table 32.

In FIG. 10(a), there is obtained a contact structure in which, of the contact angle lines S1L1, S1L2, S1L0; S2L0, S2L1, S2L2; S1R0, S1R1, S1R2; S2R0, S2R1, S2R2 of the balls 3a locating opposite sides of each of the movable blocks 4L, 4R of the two sets of liner motion guide apparatus 1L, 1R, the contact angle lines S1L0, S2L0, S1R0, S2R0, which correspond to the circular arc-groove, incline down toward the central side of the stationary bed 31 relative to the horizontal line H.

When the moments ML, MR apply in directions as shown in FIG. 10(a) in dotted lines so as to tilt the movable block inward, there is obtained a contact structure in which the contact angle lines S1L0, S2L0, S1R0, S2R0 incline up toward the central side of the table 32 relative to the horizontal line H. Such a contact structure is not however illustrated.

In FIG. 10(b), there is obtained a contact structure in which, of the contact angle lines S1L0, S1L1, S1L2; S2L1, S2L2, S2L0; S1R0, S1R1, S1R2; S2R1, S2R2, S2R0 of the balls 3a locating opposite sides of each of the movable blocks 4L, 4R of the two sets of liner motion guide apparatus 1L, 1R, the contact angle lines S1L0, S2L0, S1R0, S2R0, which correspond to the circular arc-groove, incline down toward the central side of the stationary bed 31 relative to the horizontal line H.

When the moments ML, MR apply in directions as shown in FIG. 10(b) in dotted lines so as to tilt the movable block inward, there is obtained a contact structure in which the contact angle lines S1L0, S2L0, S1R0, S2R0 incline up toward the central side of the table 32 relative to the horizontal line H. Such a contact structure is not however illustrated.

There is almost no deviation of the contact points of the ball with the first and second circular arcs C1, C2 of the Gothic arc-groove and the contact point of the ball with the single circular arc C0 of the circular arc-groove may deviate in the width direction of the groove, until an angle between the horizontal line H and the contact angle line S0 of the ball with the single circular arc C0 of the circular arc-groove gradually increases from 0 degrees to reach the prescribed angle θ 1 so that the above-mentioned contact angle line S0 coincides with an extended line of any one of the contact angle lines S1, S2 of the ball with the first and second circular arcs C1, C2 of the Gothic arc-groove, as shown in FIG. 10(c). The position of the contact point on the single circular arc C0 of the circular arc-groove can dynamically be determined by the balance of the contact point reaction force N1, N2 and N3 in the three-point contact structure of the ball.

When the above-mentioned angle exceeds the prescribed angle θ 1, the ball is put into the two-point contact state having one contact point of the ball with the single circular arc C0 of the circular-arc groove and the other contact point of the ball with the first circular arc C1 of the Gothic arc groove, which is symmetric with the above-mentioned one contact point with respect to the center "O" of the ball, and the other second circular arc C2 of the Gothic arc groove does not come into contact with the ball, as shown in FIG. 10(d).

The opposite movable blocks 4, 4 are mounted in an inclined state in such an active manner. When the guide rails of the two sets of the linear motion guide apparatus are fixed on the stationary bed so as to parallelly spaced apart from each other and the table is mounted on these movable blocks in a usual manner, there exists an inevitable fitting error. The fitting error can be compensated and the movable blocks simultaneously incline, resulting in change in the contact angle.

According to the linear motion guide apparatus of the present invention in which the loaded-ball running grooves and the loaded-ball running counter-groove have a shape in its cross section, which approximates a contour of the ball, the small fitting error causes the contact angle of the ball to vary so as to provide the inclined state of the movable blocks. It is therefore possible to suppress play in the table guide apparatus.

Now, a comparison will be made among the four-point contact structure in which the ball of the linear motion guide apparatus is held between the pair of Gothic arc-grooves, the two-point contact structure in which the ball thereof is held between the pair of circular arc-grooves and the three-point contact structure in which the ball thereof is held between the Gothic arc-groove and the circular arc-groove. The four-point contact structure can provide almost no play, but has a low misalignment compensation property. The two-point contact structure has a high misalignment compensation property, but provides much play. It is therefore effective to incline the movable blocks having the two-point contact structure in an active manner as mentioned above to suppress the play. The three-point contact structure has a middle misalignment compensation property and can provide the play, which is less than that of the two-point contact structure and more than that of the four-point contact structure.

In the above-described first to fifth embodiments of the present invention, the exemplified liner motion guide apparatus are described as types having the guide rail in which the opposite loaded-ball running counter-grooves have any one of the circular arc shape and the Gothic arc shape. However, the combination of the circular arc grooves is used for the set of the loaded-ball running groove and the loaded-ball running counter-groove with respect to one of the trains of balls locating in the opposite sides of the guide rail so as to provide the two-point contact structure, and the combination of the Gothic arc grooves is used for the set of the loaded-ball running groove and the loaded-ball running counter-groove with respect to the other of the above-mentioned trains of balls so as to provide the four-point contact structure. The combination of the two-point contact structure with the three-point contact structure and the combination of the three-point contact structure with the four-point contact structure may be used.

According to the present invention described above, it is possible to prevent the ball from coming off the loaded-ball running groove and the loaded-ball running counter-groove by holding the front and rear sides of the ball by means of the ball-supporting members locating in these grooves. The ball-supporting members locate within the loaded-ball running groove and the loaded-ball running counter-groove so that the ball-supporting members can be made large to the extent that their size is substantially identical with the diameter of the ball, irrespective of the depths of these grooves. It is therefore possible to support the balls surely.

The opposing surfaces of the movable block and the guide rail are brought into the closer relationship to the joint member to increase the depths of the loaded-ball running groove and the loaded-ball running counter-groove as much as possible. It is therefore possible to prevent the ball from coming into contact with the edges of the grooves even when the deviation of the contact points of the ball with the grooves in their width direction occurs. There can accordingly be avoided the occurrence of the problem of the edge load, in which stress concentrates in the edges of the grooves. It is therefore possible to extend the range of an area within which the ball can come into contact with the grooves in their width direction, thus permitting selection of an appropriate contact angle within an extended range thereof.

The fitting length of the ball into the loaded-ball-running groove and the loaded-ball-running counter-groove in their depth direction also increases. Even when there applies the load having a function of shifting parallelly the opposing surfaces of the movable block and the guide rail in opposite directions to each other in the width direction of the grooves, the contact points of the ball with the grooves deviate within an intermediate region between the deepest point of the grooves and the edges thereof, thus making it possible to prevent the ball from coming into contact with the edges of the grooves.

When there is adopted a structure in which a single loaded-ball running counter-groove extending linearly is formed on each of the opposite side surfaces of the guide rail so as to provide a total number of two, and loaded-ball running grooves corresponding to the loaded-ball running counter-grooves of the guide rail are formed on opposite support leg portions of the movable block, lateral direction load, which has a function of urging the support leg portions of the movable block against the opposite side surfaces of the guide rail, applies so as to compress the ball locating between the guide rail and the corresponding loaded-ball running groove of the support leg portions. The ball bears the lateral direction load without causing any undesirable movement of the movable block.

When there applies radial load having a function of pressing the movable block toward the guide rail, inverse-radial load having a function of lifting the movable block from the guide rail or moment load having a function of swinging the movable block around the guide rail, there is generated force having a function of causing the loaded-ball running groove and the loaded-ball running counter-groove, between which the balls locate, to deviate parallelly from each other in the opposite directions, i.e., in a sharing direction. The increased depths of the loaded-ball running groove and the loaded-ball running counter-groove however makes it possible to keep deviation of the ball to a minimum and support the movable block without causing its unfavorable movement.

When the shape of each of the loaded-ball running groove and the loaded-ball running counter-groove in its cross section approximates the contour of the ball, it is possible to prevent the unfavorable movement of the ball relative to the grooves.

When the ball chain has a non-endless belt structure, it is possible to carry out an assembling operation in a very easy manner.

Each of the loaded-ball running grooves and the loaded-ball running counter-grooves may be formed into a circular arc-groove shape having a single circular arc in a cross-section. Such a circular arc-groove shape permits the ball to move relatively freely in the grooves in their width direction. It is therefore preferable to adopt an increased depth structure of the grooves and an approximation structure of the cross-sectional shape thereof to the contour of the ball as in the present invention.

Each of the loaded-ball running grooves and the loaded-ball running counter-grooves may be formed into the Gothic arc-groove shape having two circular arcs in a cross-section. Such a Gothic arc-groove shape can prevent more effectively the ball from moving in the width direction of the grooves in comparison with the circular arc-groove shape. The support of the balls with the use of the ball chain permits, in the same manner as the circular arc-groove shape, to increase the depths of the loaded-ball running grooves and the loaded-ball running counter-grooves as much as possible, thus preventing the occurrence of the edge load.

A chain-guide member may be provided on the surface of the movable block, which is in a vicinity of the loaded-ball running groove thereof, the chain-guide member having projections that come into contact with the joint members to prevent the ball chain from coming off the movable block. The projections of the chain-guide member can prevent the ball chain from sagging down when the guide rail is pulled out of the movable block. In case where the ball chain has a non-endless belt structure, it is possible to prevent effectively the ball chain from sagging down.

At least one of the ball return passage and an inner peripheral portion of the ball direction changing passage may be formed of a resin-formed body, which is integrally formed with the block body. Such a structure permits a precise formation of the endless circulation passage so as to carry out a smooth guidance of the ball in cooperation with the guidance of ball circulation with the use of the ball chain.

At least one of the ball return passage, an inner peripheral portion of the ball direction changing passage and the chain-guide member may be formed of a resin-formed body, which is integrally formed with the block body. In this case, the chain-guide member can also be formed precisely, thus preventing it from coming into contact with the ball chain in an unfavorable manner.

According to the table guide apparatus of the present invention, two sets of the linear motion guide apparatus are provided, and the guide rails of the two sets of the apparatus are fixed on a stationary bed so as to be parallelly spaced apart from each other, and a table is mounted on the movable blocks of the two sets of the apparatus in a state that moments having functions of swinging the movable blocks around their longitudinal axis relative to the guide rails in opposite directions are given to the movable blocks. The linear motion guide apparatus itself can bear the vertical direction load, the lateral direction load and the moment load, while suppressing play. Arrangement of the movable blocks of the two sets of the linear motion guide apparatus in an inclined state makes it possible to suppress play effectively in the table guide apparatus.

## Claims

1. A linear motion guide apparatus comprising:
a guide rail; and
a movable block provided movably on said guide rail through a plurality of balls,
said movable block having a block body and direction changing passage forming members, said block body being provided with loaded-ball running grooves corresponding to loaded-ball running counter-grooves formed on said guide rail and with bail return passages provided in parallel with said loaded-ball running grooves, and said direction changing passage forming members being provided on opposite sides of said block body for connecting said loaded-ball running grooves with said ball return passages to form ball direction changing passages for forming endless circulation passages for the balls;
wherein:
there is provided a ball chain, which comprises ball-supporting members and joint members having flexibility, each of said ball-supporting members locating between adjacent two balls so that front and rear sides of each of the bails in a running direction thereof are held by adjacent two ball-supporting members, and said joint members connecting the adjacent two ball-supporting members with each other; and
said ball-supporting members of said ball chain locate in the loaded-ball running counter-groove of said guide rail and the loaded-ball running groove of said movable block, the joint member extends into a gap formed between opposing surfaces of said movable block and said guide rail, on which the loaded-ball running groove and the loaded-ball running counter-groove are formed, respectively, and depths of the loaded-ball running groove and the loaded-ball running counter-groove are increased by bringing said opposing surfaces of said movable block and said guide rail into a closer relationship to said joint member.

2. A linear motion guide apparatus comprising:
a guide rail having a rectangular cross section; and
a movable block having opposite support leg portions, which face opposite side surfaces of said guide rail,
said guide rail having on each of the opposite side surfaces thereof a single loaded-ball running counter-groove extending linearly so as to provide a total number thereof of two, and said movable block having on the opposite support leg portions thereof loaded-ball running grooves corresponding to the loaded-ball running counter-grooves of said guide rail,
said movable block having a block body and direction changing passage forming members, said block body being provided with loaded-ball running grooves corresponding to said loaded-ball running counter-grooves of said guide rail and with non-loaded-ball return passages provided in parallel with said loaded-ball running grooves, and said direction changing passage forming members being provided on opposite sides of said block body for connecting said loaded-ball running grooves with said non-loaded-ball return passages to form ball direction changing passages for forming endless circulation passages for the balls;
wherein:
there is provided a ball chain, which comprises ball-supporting members and joint members having flexibility, each of said ball-supporting members locating between adjacent two balls so that front and rear sides of each of the balls in a running direction thereof are held by adjacent two ball-supporting members to prevent the ball from coming off the ball-supporting members, and said joint members connecting the adjacent two ball-supporting members with each other; and
said ball-supporting members of said ball chain locate in the loaded-ball running counter-groove of said guide rail and the loaded-ball running groove of said movable block, the joint member extends into a gap formed between opposing surfaces of said movable block and said guide rail, on which the loaded-ball running groove and the loaded-ball running counter-groove are formed, respectively,
and depths of the loaded-ball running groove and the loaded-ball running counter-groove are increased by bringing said opposing surfaces of said movable block and said guide rail into a closer relationship to said joint member.

3. The apparatus as claimed in Claim 1 or 2, wherein:
each of said loaded-ball running grooves and said loaded-ball-running counter-grooves has a shape in its cross section, which approximates a contour of the ball.

4. The apparatus as claimed in any one of Claims 1 to 3, wherein: said ball chain has a non-endless belt structure.

5. The apparatus as claimed in any one of Claims 1 to 4, wherein:
each of said loaded-ball running grooves and said loaded-ball-running counter-grooves is formed into a circular arc-groove shape having a single circular arc in a cross-section.

6. The apparatus as claimed in any one of Claims 1 to 4, wherein:
each of said loaded-ball running grooves and said loaded-ball-running counter-grooves is formed into a Gothic arc-groove shape having two circular arcs in a cross-section.

7. The apparatus as claimed in any one of Claims 1 to 4, wherein:
each of any one of a set of said loaded-ball running grooves formed on said movable block and a set of said loaded-ball running counter-grooves formed on said guide rail is formed into a circular arc-groove shape having a single circular arc in a cross-section, and each of another thereof is formed into a Gothic arc-groove shape having two circular arcs in a cross-section.

8. The apparatus as claimed in Claim 7, wherein:
each of said loaded-ball running counter-grooves of said guide rail is formed into the circular arc-groove shape and each of said loaded-ball running grooves of said movable block is formed into the Gothic arc-groove shape.

9. The apparatus as claimed in Claim 7, wherein:
each of said loaded-ball running counter-grooves of said guide rail is formed into the Gothic arc-groove shape and each of said loaded-ball running grooves of said movable block is formed into the circular arc-groove shape.

10. The apparatus as claimed in any one of Claims 5 to 9, wherein:
the circular arc of said loaded-ball running grooves and said loaded-ball running counter-grooves has a radius of curvature, which is determined to be within a range of from 50.5 percent to 52.0 percent of a diameter of the ball.

11. The apparatus as claimed in any one of Claims 1 to 10, wherein:
a chain-guide member is provided on the surface of said movable block, which is in a vicinity of said loaded-ball running groove thereof, said chain-guide member having projections that come into contact with the joint members to prevent said ball chain from coming off said movable block.

12. The apparatus as claimed in any one of Claims 1 to 6, and 10, wherein:
at least one of the bail return passage and an inner peripheral portion of the ball direction changing passage is formed of a resin-formed body, which is integrally formed with said block body.

13. The apparatus as claimed in Claim 11, wherein:
at least one of the ball return passage, an inner peripheral portion of the ball direction changing passage and the chain-guide member is formed of a resin-formed body, which is integrally formed with said block body.

14. A table guide apparatus comprising:
two sets of the linear motion guide apparatus as claimed in any one of Claims 2 to 13;
wherein:
the guide rails of the two sets of the linear motion guide apparatus are fixed on a stationary bed so as to be parallelly spaced apart from each other, and a table is mounted on the movable blocks of said two sets of the linear motion guide apparatus in a state that moments having functions of swinging the movable blocks around their longitudinal axis relative to the guide rails in opposite directions are given to the movable blocks;
in one set of the linear motion guide apparatus, both a contact angle line connecting contact points of the ball, which locates in a left-hand side relative to a longitudinal central axis of the movable block, with the loaded-ball running groove and the loaded-ball running counter-groove and a contact angle line connecting contact points of the ball, which locates in a right-hand side relative to the longitudinal central axis thereof, with the loaded-ball running groove and the loaded-ball running counter-groove incline in a same direction by a prescribed inclination angle relative to a horizontal plane passing through a central axis of the guide rail in a state where the stationary bed is placed horizontally; and
in another set of the linear motion guide apparatus, both a contact angle line connecting contact points of the ball, which locates in a left-hand side relative to a longitudinal central axis of the movable block, with the loaded-ball running groove and the loaded-ball running counter-groove and a contact angle line connecting contact points of the ball, which locates in a right-hand side relative to the longitudinal central axis thereof, with the loaded-ball running groove and the loaded-ball running counter-groove incline in a direction, which is opposite to said direction, by said prescribed inclination angle.

15. A table guide apparatus comprising:
two sets of the linear motion guide apparatus as claimed in any one of Claims 2 to 13;
wherein:
the guide rails of the two sets of the linear motion guide apparatus are fixed on a stationary bed so as to be parallelly spaced apart from each other, and a table is mounted on the movable blocks of said two sets of the linear motion guide apparatus.
said prescribed inclination angle.
